**Europäisches Patentamt**

**European Patent Office**

**Office européen des brevets**

(19)

(11) Veröffentlichungsnummer : **0 145 828**
**B1**

# (12) EUROPÄISCHE PATENTSCHRIFT

(45) Veröffentlichungstag der Patentschrift :
02.12.87

(21) Anmeldenummer : 84104053.8

(22) Anmeldetag : 11.04.84

(51) Int. Cl.⁴ : **F 16 K  17/38**, F 16 K  31/56

(54) **Absperrarmatur für Gasleitungen.**

(30) Priorität : 10.12.83 DE 3344704

(43) Veröffentlichungstag der Anmeldung :
26.06.85 Patentblatt 85/26

(45) Bekanntmachung des Hinweises auf die Patenterteilung : 02.12.87 Patentblatt 87/49

(84) Benannte Vertragsstaaten :
AT BE CH FR GB IT LI NL SE

(56) Entgegenhaltungen :
CH-A-   410 340
CH-A-   522 843
DE-A- 3 127 545
FR-A- 2 343 187

(73) Patentinhaber : Streif, Hans
Via Pastura Castelletto del Lago
CH-6983 Magliaso/Lugano (CH)

(72) Erfinder : Müllers, Josef
Im Sandfeld 2
D-4054 Nettetal-Kaldenkirchen (DE)

(74) Vertreter : Stenger, Alex, Dipl.-Ing. et al
Patentanwälte Dipl.-Ing. A. Stenger Dipl.-Ing. W.
Watzke Dipl.-Ing. H.J. Ring Kaiser-Friedrich-Ring 70
D-4000 Düsseldorf 11 (DE)

**Beschreibung**

Die Erfindung betrifft eine Absperrarmatur für Gasleitungen, wie sie im Oberbegriff von Anspruch 1 angegeben und aus der DE-A-3 127 545 bekannt ist.

Ein ständiges Problem ist die Brandschutzsicherung von Gasleitungen bei der Gasversorgung von Haushalten, denn die Gaszähler können durch Brandeinwirkung derart beschädigt werden, daß das Gas unkontrolliert aus den Gasleitungen ausströmen kann und Explosionsgefahr verursacht. Herkömmliche Absperrarmaturen verlangen eine manuelle Betätigung und sind daher als Brandschutzsicherung unbrauchbar, denn bei Brand muß ein automatisches Schließen der Gaszuführung gewährleistet sein. Aus diesem Grunde ist eine Absperrarmatur entwickelt worden, die bei gewöhnlichem Temperaturanstieg infolge von Brandeinwirkung automatisch schließt und dadurch jeden unkontrollierten Gasaustritt unterbindet. Eine Dehnstoffpatrone weist einen bei vorgegebener Temperatur sich ausdehnenden Werkstoff auf, der infolge seiner Ausdehnung den Dehnbolzen aus der Patrone herausdrückt und den Ventilschließkörper schließlich auf seinen Ventilsitz drückt. Folglich wird bei Brandeinwirkung wegen des dann extremem Temperaturanstieges eine automatische Absperrung der Gaszufuhr erreicht.

Als Dehnstoffe kommen z. B. Wachs, Paraffin, oder dergleichen Werkstoffe in Frage, die ab ca. 150 °C ein extremes Ausdehnungsvermögen zeigen. — Die bekannte Absperrarmatur hat sich an sich bewährt, ist jedoch weiter entwicklungsfähig. Das gilt insbesondere in bezug auf die Schließzeiten bei Brandeinwirkung, damit Gasaustritt unterbunden wird, bevor beispielsweise die regelmäßig weichgelöteten Gaszähler infolge Temperatureinwirkung beschädigt werden und dort unkontrollierter Gasaustritt stattfindet.

Der Erfindung liegt die Aufgabe zugrunde, eine Absperrarmatur für Gasleitungen der eingangs beschriebenen Art zu schaffen, die sich durch eine extrem kurze Schließzeit auszeichnet.

Diese Aufgabe wird durch die im Anspruch 1 enthaltenen Merkmale gelöst. — Bei der bekannten Absperrarmatur ist die Dehnstoffpatrone in dem Armaturengehäuse bzw. in der Betätigungsvorrichtung für den Ventilschließkörper angeordnet, so daß der aus Brandeinwirkung resultierende Temperaturanstieg verhältnismäßig langsam von der Dehnstoffpatrone erfaßt wird. Folglich muß eine entsprechend langsame Schließzeit in Kauf genommen werden. Die Erfindung geht von der Erkenntnis aus, daß ein solcher Temperaturanstieg dann extrem schnell von der Dehnstoffpatrone erfaßt wird, wenn diese außerhalb des Armaturengehäuses und der Betätigungsvorrichtung angeordnet ist, also für die Außentemperatur gleichsam frei zugänglich ist. Eine extrem schnelle Temperaturübertragung wird dadurch erreicht, daß auf die Dehnstoffpatrone ein Wärmeleitkörper aufgesetzt ist. Aus den beanspruchten Maßnahmen resultiert ein schlagartiges Schließen des Ventilschließkörpers bei Temperaturanstieg infolge von Brandeinwirkung, so daß unkontrollierter Gasaustritt im Bereich durch Brandeinwirkung beschädigter Gaszähler oder dergleichen nicht länger zu befürchten ist.

Weitere erfindungswesentliche Merkmale sind im folgenden aufgeführt. So kann die Dehnstoffpatrone mittels einer in die Betätigungsvorrichtung bzw. deren Grundkörper einschraubbaren Klemmschraube auf der Betätigungsvorrichtung axial mit dem Ventilschließkörper fixierbar sein. Nach bevorzugter Ausführungsform der Erfindung ist der Wärmeleitkörper als eine auf die Dehnstoffpatrone aufsteckbare Haube oder Buchse mit sternartig angeordneten Wärmeleitrippen ausgebildet. Es besteht aber auch die Möglichkeit, daß die Dehnstoffpatrone selbst solche Wärmeleitrippen aufweist. Jedenfalls wird dadurch jeder Temperaturanstieg besonders schnell erfaßt und auf die Dehnstoffpatrone bzw. ihren Dehnstoff übertragen. Das gilt auch dann, wenn nach weiterer Empfehlung die Dehnstoffpatrone mit dem Wärmeleitkörper von einer Schutzkappe aus wärmeleitfähigem Material, wie beispielsweise Metall, umgeben ist.

Die durch die Erfindung erreichten Vorteile sind im wesentlichen darin zu sehen, daß eine Absperrarmatur für Gasleitungen verwirklicht wird, die bei Temperaturanstieg infolge Brandwirkung schlagartig schließt, und zwar in weniger als 20 Sekunden, weil nunmehr die Außentemperatur extrem schnell erfaßt und auf die Dehnstoffpatrone bzw. den Dehnstoff übertragen wird, so daß unkontrollierter Gasaustritt selbst aus anderen Gasarmaturen mit Sicherheit unterbunden wird. Das gelingt in verhältnismäßig einfacher und funktionsgerechter Bauweise.

Im folgenden wird die Erfindung anhand einer lediglich ein Ausführungsbeispiel darstellenden Zeichnung näher erläutert ; es zeigen :

Figur 1 eine erfindungsgemäße Absperrarmatur im Vertikalschnitt, und zwar mit geöffnetem Hilfsschließkörper und in Schließstellung befindlichem Ventilschließkörper nach mechanischer Betätigung,

Figur 2 den Gegenstand nach Fig. 1 in Offenstellung,

Figur 3 den Gegenstand nach Fig. 1 mit in Offenstellung befindlichem Ventilschließkörper, jedoch thermisch geschlossenem Hilfsschließkörper, und

Figur 4 eine abgewandelte Ausführungsform nach Fig. 1.

In den Figuren ist eine Absperrarmatur — beispielsweise Eckarmatur oder Durchflußarmatur — für Gasleitungen dargestellt, die in ihrem grundsätzlichen Aufbau aus einem Armaturengehäuse 1 mit Gaseintrittsstutzen 2 und Gasaustrittsstutzen 3 und mit einem Ventilsitz 4 zwischen Gaseintrittsstutzen 2 und Gasaustrittsstutzen 3 sowie aus einem gegen den Ventilsitz 4 geführten Ventilschließkörper 5 besteht, der mittels einer manuellen Betätigungsvorrichtung 6 in Schließstellung überführbar sowie unabhängig von der Betätigungsvorrichtung 6 in Schließstellung beweglich ist, wobei dem Ventilschließkörper 5 eine Dehnstoffpatrone 7 zugeordnet ist und die Dehnstoffpatrone 7 einen axialbeweglichen, koaxial auf den Ventilschließkörper 5 arbeitenden Dehnbolzen 8 aufweist. Die Dehnstoffpatrone 7 ist außerhalb des Armaturengehäuses 1 auf der manuellen Betätigungsvorrichtung 6 angeordnet. Die manuelle Betätigungsvorrichtung 6 wird in bekannter Weise mit einem Schlüssel 9 betätigt und weist Steuerkurven 10 auf, in welche in den Ventilschließkörper 5 radial eingesetzte Steuerzapfen 11 eingreifen. Die Dehnstoffpatrone 7 ist mittels einer in die manuelle Betätigungsvorrichtung 6 bzw. deren Grundkörper einschraubbaren Klemmschraube 12 auf der manuellen Betätigungsvorrichtung 6 koaxial zu dem Ventilschließkörper 5 fixierbar. Auf die Dehnstoffpatrone 7 ist ein Wärmeleitkörper 13 aufgesetzt. Der Wärmeleitkörper 13 ist als eine auf die Dehnstoffpatrone aufsteckbare Buchse mit sternartig angeordneten Wärmeleitrippen 14 ausgebildet. Dadurch wird die jeweilige Außentemperatur besonders schnell erfaßt und auf die Dehnstoffpatrone 7 bzw. ihren Dehnstoff übertragen. Die Dehnstoffpatrone 7 und der Wärmeleitkörper 13 sind von einer Schutzkappe 15 aus wärmeleitfähigem Material, beispielsweise Metall, umgeben.

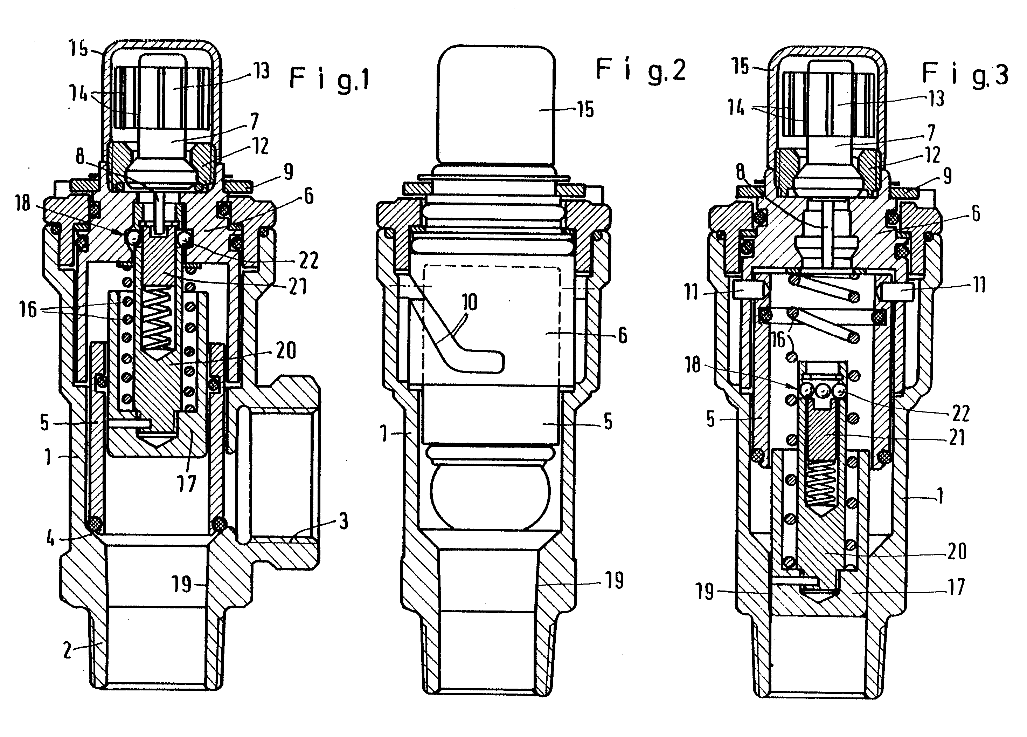

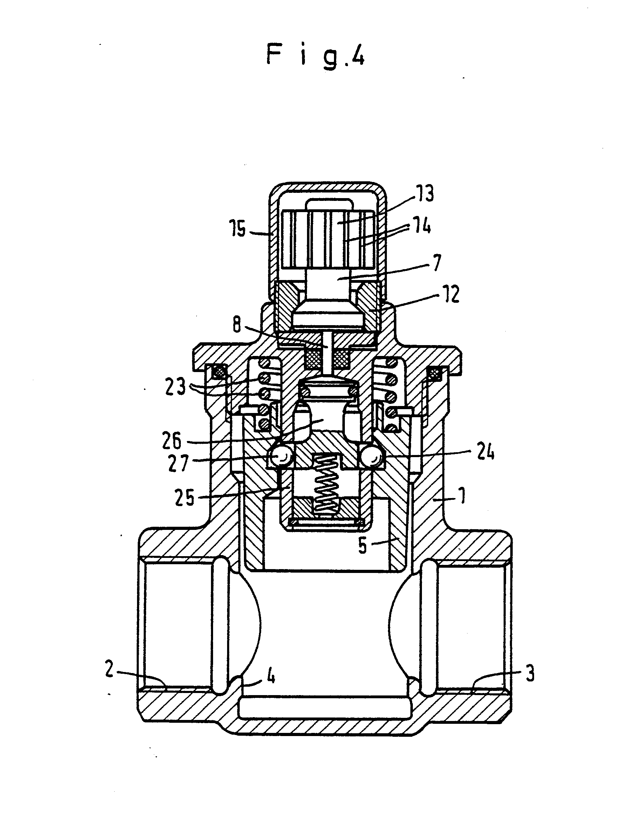

Der Ventilschließkörper 5 kann mittels einer Rückstellfeder in Offenstellung gehalten und mittels einer Vorrichtung gegen Federbeaufschlagung in Schließstellung überführbar sein. Dargestellt ist in den Figuren 1 bis 3 eine Ausführungsform mit einem in dem Ventilschließkörper 5 geführten, in Offenstellung gehaltenen und mit einer Druckfeder 16 beaufschlagten Hilfsschließkörper 17, wobei der Dehnbolzen 8 auf den Hilfsschließkörper 17 arbeitet. Der Hilfsschließkörper 17 ist in Schließrichtung von der Druckfeder 16 beaufschlagt und mittels einer Verriegelungsvorrichtung 18 in Offenstellung gehalten, die bei ausfahrendem Dehnbolzen 8 entriegelt und den Hilfsschließkörper 17 zum Vorschnellen auf seinen Dichtsicht 19 freigibt. Der Hilfsschließkörper 17 ist als Topfzylinder ausgebildet. Die Druckfeder 16 ist zwischen dem Boden des Zylinders und der manuellen Betätigungsvorrichtung 6 mit Vorspannung abgestützt. In dem Topfzylinder ist ein von der Druckfeder 16 umgebender Haltebolzen 20 fixiert. In dem Haltebolzen 20 ist ein entgegen Entriegelungsrichtung federbeaufschlagter Sperrkolben 21 für Verriegelungselemente 22, nämlich Kugeln, der Verriegelungsvorrichtung geführt, wobei der Sperrkolben 21 bei in Offenstellung befindlichem Hilfsschließkörper 17 die Verriegelungselemente 22 in Verriegelungsstellung hält und nach Betätigung durch den ausfahrenden Dehnbolzen 8 der Dehnstoffpatrone 7 in Entriegelungsstellung freigibt. Die Verriegelungselemente 22 greifen in Verriegelungsstellung teilweise in die manuelle Betätigungsvorrichtung 6 und teilweise in den Haltebolzen 20 ein, während sie nach Freigabe durch den Sperrkolben 21 hinter dem Sperrkolben vollständig in den Haltebolzen 20 eintreten. — Bei der in Fig. 4 dargestellten Ausführungsform ist der Ventilschließkörper 5 in Schließrichtung von einer Druckfeder 23 beaufschlagt sowie mittels einer Verriegelungsvorrichtung 24 in Offenstellung gehalten, welche bei ausfahrendem Dehnbolzen 8 entriegelt und den Ventilschließkörper 5 zum Vorschnellen auf den Ventilsitz 4 freigibt. Die Verriegelungsvorrichtung 24 ist in einer zentralen Führungsbuchse 25 am Deckel des Armaturengehäuses 1 mit federbeaufschlagtem Sperrkolben 26 und Verriegelungselementen 27 für den Ventilschließkörper 5 angeordnet. Auch in diesem Fall entriegelt der Sperrkolben 26 bei ausfahrendem Dehnbolzen 8 die Verriegelungsvorrichtung 24, so daß dann allerdings der Ventilschließkörper 5 in Schließstellung überführt wird. Diese Ausführungsform kommt also ohne einen Hilfsschließkörper aus.

**Patentansprüche**

1. Absperrarmatur für Gasleitungen, bestehend aus einem Armaturengehäuse (1) mit Gaseintrittsstutzen (2) und Gasaustrittsstutzen (3) und mit einem Ventilsitz (4) zwischen Gaseintrittsstutzen und Gasaustrittsstutzen sowie aus einem gegen den Ventilsitz geführten Ventilschließkörper (5), der mittels einer manuellen Betätigungsvorrichtung (6) in Schließstellung überführbar sowie unabhängig von der manuellen Betätigungsvorrichtung mittels einer auf Temperaturerhöhungen ansprechenden Vorrichtung in Schließstellung beweglich ist, wobei diese Vorrichtung eine dem Ventilschließkörper zugeordnete Dehnstoffpatrone (7) mit einem axialbeweglichen, koaxial auf den Ventilschließkörper arbeitenden Bolzen (8) aufweist, dadurch gekennzeichnet, daß die Dehnstoffpatrone (7) außerhalb des Armaturengehäuses (1) auf der manuellen Betätigungsvorrichtung (6) angeordnet und auf die Dehnstoffpatrone (7) ein Wärmeleitkörper (13) aufgesetzt ist.

2. Absperrarmatur nach Anspruch 1, dadurch gekennzeichnet, daß die Dehnstoffpatrone (7) mittels einer in die Betätingungsvorrichtung (6) einschraubbaren Klemmschraube (12) auf der Betätigungsvorrichtung (6) fixierbar ist.

3. Absperrarmatur nach Anspruch 1 oder 2, dadurch gekennzeichnet, daß der Wärmeleitkörper (13) als eine auf die Dehnstoffpatrone (7) aufsteckbare Haube oder Buchse mit sternartig angeordneten Wärmeleitrippen (14) ausgebildet ist.

4. Absperrarmatur nach einem der Ansprüche 1 bis 3, dadurch gekennzeichnet, daß die Dehnstoffpatrone (7) mit dem Wärmeleitkörper (13) von einer Schutzkappe (15) aus wärmeleitfähigem Material umgeben ist.

**Claims**

1. Shut-off valve for gas ducts, consisting of a valve housing (1) with a gas inlet connection (2) and a gas outlet connection (3) and with a valve seat (4) between the gas inlet and the gas outlet together with a valve closure member (5) guided in relation to the valve seat, which is movable selectively by means of a manually actuable device (6) into the closed condition and independently of the manually actuable device by means of a device responsive to temperature increase into the closure position, this device having an associated mandrel of expansible material (7) associated with the valve closure member together with a pin (8) capable of axial movement and coaxial with the valve closure member, characterized in that the expansible medium mandrel (7) is mounted externally of the valve housing (1) on the manually actuable device (6) and there is superimposed on the expansible medium mandrel (7) a heat conducting body (13).

2. Closure valve according to claim 1, characterized in that the expansion medium mandrel (7) is securable by means of a clamp screw (12) on the actuating device (6) which can be screwed into the actuating device (6).

3. Closure valve according to claim 1 or 2, characterized in that the heat conducting body (13) is constructed in the form of a cap or bush which can be inserted into the expansion medium mandrel (7) with a star-like array of heat conducting ribs (14).

4. Closure valve according to one of claims 1 to 3, characterized in that the expansion medium mandrel (7) with the heat conducting body (13) is surrounded by a protective cap (15) of heat conductive material.

**Revendications**

1. Soupape d'arrêt pour canalisations de gaz, se composant d'un corps de soupape (1) avec une tubulure d'entrée de gaz (2) et une tubulure de sortie de gaz (3) et avec un siège de soupape (4) entre la tubulure d'entrée de gaz et la tubulure de sortie de gaz, ainsi que d'un obturateur de soupape (5) guidé contre le siège de soupape et pouvant être déplacé en position de fermeture au moyen d'un dispositif de manœuvre manuel (6) et pouvant aussi être déplacé, indépendamment du dispositif de manœuvre manuel, dans la position de fermeture, au moyen d'un dispositif sensible aux élévations de température, ce dispositif comportant une cartouche à matière dilatable (7) associée à l'obturateur de soupape et présentant une tige (8) mobile en direction axiale et agissant suivant l'axe de l'obturateur de soupape, caractérisée en ce que la cartouche à matière dilatable (7) est disposée à l'extérieur du corps de soupape (1), sur le dispositif de manœuvre manuel (6), un corps conducteur de la chaleur (13) étant disposé sur la cartouche à matière dilatable (7).

2. Soupape d'arrêt selon la revendication 1, caractérisée en ce que la cartouche à matière dilatable (7) peut être fixée sur le dispositif de manœuvre (6) au moyen d'une vis de blocage (12) se vissant dans le dispositif de manœuvre (6).

3. Soupape d'arrêt selon la revendication 1 ou 2, caractérisée en ce que le corps conducteur de la chaleur (13) est constitué en tant que capuchon ou douille s'engageant sur la cartouche à matière dilatable (7) avec des ailettes (14) conductrices de la chaleur disposées en étoile.

4. Soupape d'arrêt selon l'une des revendications 1 à 3, caractérisée en ce que la cartouche à matière dilatable (7) est, avec le corps conducteur de la chaleur (13), entourée par un capot de protection (15) en matière conductrice de la chaleur.

Fig.3

Fig.2

Fig.1

# F i g.4